# EUROPEAN PATENT SPECIFICATION

(11) **EP 0 589 940 B1**
(45) Date of publication and mention of the grant of the patent: **29.12.1997**
(21) Application number: 92911660.6
(22) Date of filing: 12.06.1992
(51) Int. Cl.: A23C 11/04, A23C 11/06, A23C 11/08, A23C 11/00, A23C 11/02, A23C 11/10, A23D 9/04

(54) **MONOUNSATURATED DAIRY PRODUCTS**
MONOUNGESÄTTIGTE MILCHPRODUKTEN
PRODUITS LAITIERS MONO-INSATURES

(30) Priority: 14.06.1991 AU 6670/91; 13.11.1991 AU 9476/91; 13.11.1991 AU 9477/91
(43) Date of publication of application: 06.04.1994
(73) Proprietor: ASSOCIATED FOOD TECHNOLOGY PTY. LTD., Carinbah, NSW 2229 (AU)
(72) Inventor: STRONG, Andrew, Leighton Unit 4A, Caringbah, NSW 2229 (AU); STRONG, Martin, Lindsay Unit 4A, Caringbah, NSW 2229 (AU); STRONG, Maxwell, John, Caringbah, NSW 2229 (AU)
(74) Representative: Kelly, Peter F.
(86) International application number: AU9200284
(87) International publication number: WO9222214

(56) References cited:
- EP-A- 0 091 331
- EP-A- 0 255 660
- EP-A- 0 294 692
- WO-A-89/08988
- GB-A- 820 995
- GB-A- 2 255 489
- US-A- 1 816 339
- US-A- 2 335 275
- US-A- 5 063 074
- PATENTS ABSTRACTS OF JAPAN, C-42, page 124; & JP,A,55 148 055 (ASAHI DENKA KOGYO K.K.) 18 November 1980 (18.11.80), Abstract.
- PATENTS ABSTRACTS OF JAPAN, C-45, page 163; & JP,A,55 159 753 (ASAHI DENKA KOGYO K.K.) 12 December 1980 (12.12.80), Abstract.
- PATENTS ABSTRACT OF JAPAN, C-99, page 4; & JP,A,57 002 649 (FUJI SEIYU K.K.) 8 January 1982 (08.01.82), Abstract.
- PATENTS ABSTRACT OF JAPAN, C-42, page 124; & JP,A,55 148 056 (ASAHI DENKA KOGYO K.K.) 18 November 1980 (18.11.80).
- DERWENT ABSTRACT Accession No. 83-806502/44, Class D13; & SU,A,986375 (LITH BUTTER CHEESE) 7 January 1983 (07.01.83).

## Description

### Field of the Invention

The present invention relates to monounsaturated dairy products and intermediates for use in the production of such dairy products. The invention is particularly suitable for the production of monounsaturated filled milks.

### Background Art

In many westernised countries including the United Kingdom and the United States of America, cardiovascular disease is a major cause of death. Public health campaigns supported by governments are being actively promoted in order to try to reduce mortality and morbidity from this cause. In almost all national dietary guidelines a prime recommendation is to reduce total dietary fat intake and in many a reduction in saturated fat is particularly stressed. In countries with a well-developed dairy industry, dairy products constitute a significant portion of the fat in the average diet, and because saturated fatty acids constitute about 60% of the total fatty acids in milk fat, dairy products account for an even larger proportion of the saturated fat consumed. For example, in the UK dairy products constitute 29% of the total fat in the average diet and 42% of the dietary saturated fatty acids.

Such has been the acceptance of the consensus view of the role of dietary saturated fatty acids in the aetiology of cardiovascular disease that, irrespective of the validity of the scientific evidence for those views, the dairy industry in those countries has come under pressure. In many such countries, liquid milk and butter sales have fallen steadily and the proportion of milk sales represented by low fat milks has increased dramatically.

Numerous clinical trials have shown that when a saturated fat diet is replaced by an unsaturated fat diet there is generally a fall in total serum cholesterol levels. It is widely conceded that dietary saturated fats cause an increase in cholesterol biosynthesis resulting in an increase in serum cholesterol levels regardless of the cholesterol content of the diet.

Polyunsaturated fats in the diet generally result in a lowering of both low-density lipoprotein cholesterol as well as high-density lipoprotein cholesterol. Monounsaturated fats on the other hand selectively lower the harmful low-density lipoprotein cholesterol (LDL) without altering the high-density lipoprotein cholesterol which, because of its ability to mobilize the LDL serum cholesterol so that it can be removed by the liver, is considered to be healthy.

With these nutritional problems in mind, a number of attempts have been made to replace the cholesterol-containing saturated fats in dairy products, particularly liquid milks, with polyunsaturated, cholesterol-free, vegetable oils and fats. Such milks are known generically as filled milks.

Natural milk comprises an emulsion of saturated fats in water. The emulsion is stabilised by the milk fat globule membrane, this membrane consists of a complex mixture of proteins, phospholipids, glycoproteins, triglycerides, cholesterol, enzymes and other minor components and acts as a natural emulsifying agent enabling the fat to remain dispersed throughout the aqueous phase of the milk. The filled milks previously proposed have utilised known emulsifying agents to maintain the polyunsaturated fats and oils in an emulsified state in the milk from which the natural saturated fats have been removed i.e. skim milk.

When the saturated milk fats are removed from whole milk the organoleptic properties of the remaining "skim milk" such as mouth-feel, flavour etc. are unacceptable to most consumers of liquid milk and milk products derived therefrom. It is not possible to simply recombine this skim milk with other non-dairy fats such as vegetable oils etc., without developing poor mouth-feel, off-flavours etc.

It is known from US-A-5063074 to provide a low fat, low cholesterol milk product approximating the taste and mouth feel of whole or 2% milk by combining, with skim milk, a premix comprising a flavouring agent emulsified or dispersed in any non-tropical vegetable oil with the aid of specified non-lauric emulsifiers and gums. The emulsifiers/gums and the flavouring agent impart texture and flavouring properties, respectively, to the milk product. The invention concerns the identification of a specific combination of non-lauric emulsifiers which remain tasteless and odourless during extended storage, ie, an emulsifier combination comprising about 35 to 54% mono and diglycerides, about 23 to about 43% sodium stearoyl lactylate and about 12 to about 32% polysorbate 60.

US-A-1816339 discloses a food product containing certain virgin olive oils and skimmed milk, to which may be added glycero-phosphates or lacto-albumins. It is taught that various fats can be easily manipulated in order to produce products having identical properties to human breast milk but that such fats are not necessarily well assimilated. The invention involves the identification that a food product containing certain virgin olive oils as the fat, although not identical in chemical composition with human breast milk, has a degree of assimilation quite similar to such milk.

GB-A-820995 concerns a process for the preparation of a solid oil or fat-containing composition which possesses the advantage that it displays more ready liberation of oil or fat when mixed with water. Such compositions are suitable for incorporation in food mixes such as cake mixes, ice cream mixes and soup mixes. The process involves forming an emulsion of any edible animal or vegetable oil or fat in an aqueous medium at a pH of from about 8 to about 10 in the presence of milk protein and drying the emulsion to form a solid.

The present invention is directed to an alternative to such known filled dairy products and to premix preparations for use in producing dairy products according to this invention.

### Brief Description of the Invention

In a first aspect the present invention consists in a monounsaturated filled dairy product comprising skim milk, a vegetable oil derived from rape seed or sunflower seed and containing at least 70% by weight of monounsaturated oleic acid, no more than 12% by weight of polyunsaturated linoleic acid and no more than 0.5% by weight of polyunsaturated linolenic acid, and an effective amount of an emulsifier capable of maintaining the oil as a stable emulsion in the skim milk and a modifier
comprising:-
a polysaccharide or oligosaccharide; and a stabiliser comprising:-
a carbohydrate gel being an alginate, a guar gum
or a carboxymethyl cellulose.
The present inventor has found that the use of a vegetable oil having a very high proportion of the monounsaturated oleic acid avoids the problems associated with conventional filled milks which have contained a substantial proportion of the added oil in the form of polyunsaturated fats and oils. These polyunsaturated fats and oils have given rise to rancidity and off flavours in the filled milk even after relatively short periods of storage. It has been found that the high oleic vegetable oils used in the present invention do not develop this rancidity or off flavours even after considerable periods of storage. The filled milk according to this invention has the added advantage that the majority of the fatty acids present in the product are the nutritionally advantageous monounsaturated fatty acids which serve to lower the harmful low density lipoprotein cholesterol.
The skim milk to which the high oleic vegetable oil is added will typically have a fat content of less than 0.1% by weight. This may be fresh liquid skim milk or skim milk that has been reconstituted from skim milk powder. It is desirable that the non-fat solids component of the skim milk be increased to improve the mouth feel of the finished product. This advantageously may be done by adding to the skim milk a concentrated skim milk, a skim milk powder or purified or semipurified milk solids such as milk proteins including sodium caseinate. If desired for use by people showing lactose intolerance the skim milk may be enzymatically treated to at least reduce its lactose content before it is formulated into a filled milk.

The vegetable oil is derived from rape seed or sunflower seed. These oils may need to be hydrogenated to some extent to increase the oleic acid content above that of the natural oil. The monounsaturated oleic acid, which is a C18:1 fatty acid, preferably comprises from 75 to 85% by weight of the vegetable oil and more preferably at least 78% by weight of it. The linoleic acid (C18:2) is preferably present in the vegetable oil in a maximum of 6% and the linolenic acid (C18:3) in a maximum of 0.1% by weight.

The oil may be emulsified in water and the emulsion added directly to the skim milk or alternatively the oil may be emulsified and the emulsion spray dried to form a powder which can be added to the skim milk. The emulsifier system may need to be altered depending upon which of the above systems is to be used to produce the filled milk according to the invention.

The monounsaturated oil preferably comprises more than 1% by weight, and most preferably 1.2% to 5% by weight, of the filled milk. When the oil is formulated as a premix the oil preferably comprises at least 74% by weight of the premix. More preferably it comprises 74% to 79% by weight of the premix.

The emulsifiers for use in the present invention are preferably approved food grade emulsifiers and more preferably selected from:-
a) mono- and di- glycerides such as glyceryl mono stearate;
b) non-fat milk solids including milk proteins;
c) phospholipids such as lecithin; and
d) mixtures of two or more of the above.

Other emulsifiers may be used in addition to or together with one or more of the above mentioned emulsifiers. It is particularly preferred in the case of liquid emulsions which are to be added directly to the skim milk the emulsifier preferably comprises a mixture of a mono- and di- glyceride emulsifier and a stabiliser being a carbohydrate gum such as sodium alginate or guar gum. In the case in which the oil is to be emulsified and spray dried to form a premix which can be added to the skim milk it is possible to use the natural emulsifiers present in non-fat milk solids, supplemented if desired with additional milk proteins, to form an emulsion which can be spray dried to form a premix which can be added to skim milk. In this case, however, it is desirable to add an additional emulsifier or stabiliser being a carbohydrate gum to the premix before or during its addition to the skim milk to produce a fully stable filled milk product.

The emulsifier or mixture of emulsifiers is preferably present in an amount of up to 5% by weight of the filled milk. In the case of the premix a commensurate amount of emulsifier must be present in the premix to yield the desired quantity of emulsifier in the filled milk.

The filled milk also includes a stabiliser and a modifier to stabilise the emulsion of the oil in the skim milk. Such stabilisers and modifiers are also useful in allowing a free flowing premix to be formed. These stabilisers comprise carboydrate gels being sodium alginate, guar gum and carboxymethylcellulose. These modifiers comprise polysaccharides and oligosaccharides.

The filled milk, or the premix from which it may be made, preferably includes a water soluble polysaccharide or oligosaccharide not only as a modifier but also to provide a low degree of sweetness offsetting the oiliness provided by the added monounsaturated vegetable oil. This saccharide also increases the viscosity of the final milk product and gives a more "bulked-up" mouth feel. The most preferred polysaccharide is maltodextrin derived from the controlled hydrolysing of starch, however, other saccharides could be used with equal advantage. Corn syrup solids is another preferred source of polysaccharides for use in the present invention. If desired mono or disaccharides such as glucose, sucrose, maltose and lactose can also be added to the filled milk or the premix.

In a further embodiment a spray dried premix is provided, suitable for use in the preparation of monounsaturated filled dairy products comprising:-
(a) 70 to 85% by weight of a vegetable oil derived from rape seed or sunflower seed and containing at least 70% by weight of monounsaturated oleic acid, no more than 8% by weight of polyunsaturated linoleic acid and no more than 0.5% by weight of polyunsaturated linolenic acid; and
(b) an effective amount of an emulsifier to at least temporarily maintain the oil in the form of an emulsion in water while it is spray dried.

In the case that the oil is emulsified in water and added directly to the skim milk it is preferred to add the emulsifier and the poly- or oligo- saccharide to hot water and to then stir in the oil. The resulting emulsion is then added to liquid skim milk to which has been added liquid skim milk concentrate. The filled milk so produced is then homogenised, pasturised and packaged.

In the case that the oil is to be formed a spray dried premix it is preferred that the above procedure is followed except that additional milk solids are added directly to the oil emulsion before it is spray dried. This assists in forming a stable free flowing powder readily dissolved in skim milk to form the desired monounsaturated filled milk product. In this case all of the emulsifier may be added to the emulsion before it is spray dried, an alternative is to provide additional emulsifier or stabiliser for addition to the skim milk at the time of addition of the premix. In a particularly preferred embodiment of the invention the stabiliser and modifier comprises a mixture of carboxymethylcellulose mixed with microcrystalline cellulose, preferably in equal parts. It is known that carboxymethylcellulose can separate milk proteins from solution, however, when mixed with microcrystalline cellulose it has been found that this effect is suppressed.

The filled milk produced according to the present invention may be consumed as liquid milk or converted into manufactured products such as ice cream, soft serve ices, thick shakes, dairy spreads and the like. These products are high in monounsaturated fats and low in cholesterol.

### Best Method for Carrying Out the Invention

Hereinafter described by way of example only are preferred embodiments of the invention.

### Example 1

A premix was prepared containing:-
(a) 74.53% by weight canola oil containing 78% by weight oleic acid, 6% linoleic acid and 0.1% linolenic acid (a suitable oil is sold by EOI Pty Ltd of Sydney Australia under the trade mark "FRUCO"),
(b) 4.08% by weight of sodium caseinate,
(c) 10.69% by weight non-fat milk solids, and
(d) 10.69% by weight of maltodextrin.

The components were mixed together and water added. The resulting mixture was emulsified in a high shear mixer to produce an emulsion containing about 45% solids by weight. The emulsion was spray dried in a spray drier with an inlet temperature of approximately 200°C and an outlet temperature of about 90°C to produce a dry powdered premix.

The premix was mixed with a dry powder mixture of stabiliser and modifier comprising equal parts by weight of carboxymethylcellulose and microcrystalline cellulose. The mixture of stabiliser and modifier was prepared by:
i) hydrolysing purified cellulose derived from cotton linters with 2.5N hydrochloric acid at a temperature of 105°C for 15 minutes,
ii) neutralising the hydrolysed cellulose solution so formed,
iii) adding a solution of carboxymethylcellulose such that the combined solution contains equal weights of carboxymethylcellulose and hydrolysed cellulose, and
iv) spray drying the mixed solution.

The stabiliser and modifier was mixed with the premix and the mixture blended into skim milk to produce a filled milk having a non-fat solids content of about 11%. In order to fully develop the properties of the stabiliser the blended milk was passed twice through a homogeniser. This developed the gel like qualities of the microcrystalline cellulose and prevent it giving a powdery mouth-feel to the milk. The final stabiliser concentrationin the filled milk was approximately 0.2% by weight.

The filled milk so produced had a low level of saturated fats and cholesterol; had a high level of monounsaturated fats; was low in calories; and had a good mouth-feel and flavour.

### Example 2

To make five litres of a monounsaturated filled liquid milk containing 1.35% wt of the monounsaturated oil 22.0g of a powder containing:-

| | |
|---|---|
| Maltodextrin | 54.5% by weight |
| Polymuls GMS 65-105 (a proprietary emulsifier comprising glyceryl mono stearate) | 27.3% by weight |
| Sodium Alginate | 9.1% by weight |
| Guar Gum | 9.1% by weight |

was mixed into 375ml of water at 80°C and mixed vigorously until dissolved (approx. 5 mins). 65g of the canola oil used in Example 1 was then heated to 40°C and added to the above mixture and thoroughly stirred for 5 to 10 mins.

4325 ml liquid skim milk (10% solids 0.1% fat) and 300 ml of concentrated skim milk (33.5% solids, 0.31% fat) were separately mixed together at 4°C. The oil emulsion prepared as described above was added to the milk and mixed for a further 5 to 10 mins.

The resulting filled milk was pasteurised at 75 - 80°C and homogenised at 2500 - 3500 psi. The product was then chilled and packaged. It was found to have a good flavour and mouth feel and was stable for at least 14 days under refrigeration without developing off flavours or rancidity. When subjected to Ultra High Temperature (UHT) treatment this filled milk was stable for at least 6 months without developing off flavour or rancidity.

The present embodiments are to be considered in all respects as illustrative and not restrictive.

## Claims

1. A monounsaturated filled dairy product comprising skim milk, a vegetable oil derived from rape seed or sunflower seed and containing at least 70% by weight of monounsaturated oleic acid, no more than 12% by weight of polyunsaturated linoleic acid and no more than 0.5% by weight of polyunsaturated linolenic acid, and an effective amount of an emulsifier capable of maintaining the oil as a stable emulsion in the skim milk and a modifier comprising:-
a polysaccharide or oligosaccharide; and a stabiliser comprising:-
a carbohydrate gel being an alginate, a guar gum or a carboxymethyl cellulose.

2. A filled dairy product as claimed in claim 1 in which the dairy product is liquid milk.

3. A filled dairy product as claimed in claim 1 in which the oleic acid comprises from 75% to 85% by weight of the vegetable oil, the linoleic acid comprises no more than 6% by weight of the vegetable oil and the linolenic acid comprises no more than 0.1% by weight of the vegetable oil.

4. A filled dairy product as claimed in claim 2 in which the vegetable oil comprises from 1 to 5% by weight of the filled milk.

5. A filled dairy product as claimed in claim 1 in which the emulsifier is selected from:-
a) mono- and di- glycerides;
b) non-fat milk solids, including milk protein;
c) phospholipids; and
d) mixtures of two or more of the above.

6. A filled dairy product as claimed in claim 1 in which the emulsifier comprises non-fat milk solids and either a mono- or di- glyceride or additional milk protein.

7. A filled dairy product as claimed in claim 1 in which the stabiliser and modifier includes a carbohydrate gel which is carboxymethyl cellulose with which has been mixed microcrystalline cellulose.

8. A filled dairy product as claimed in claim 1 in which the modifier includes a polysaccharide being a maltodextrin or consisting of corn syrup solids.

9. A spray dried premix suitable for use in the preparation of monounsaturated filled dairy products comprising:-
(a) 70 to 85% by weight of a vegetable oil derived from rape seed or sunflower seed and containing at least 70% by weight of monounsaturated oleic acid, no more than 12% by weight of polyunsaturated linoleic acid and no more than 0.5% by weight of polyunsaturated linolenic acid; and
(b) an effective amount of an emulsifier to at least temporarily maintain the oil in the form of an emulsion in water while it is spray dried.

## Patentansprüche

1. Ein durch monoungesättigte Stoffe angereichertes Molkereiprodukt mit entrahmter Milch, einem vegetabilischen Öl, das sich ableitet von Rapssamen oder Sonnenblumenkernen und enthält mindestens 70 Gew.-% monoungesättigte Ölsäure, nicht mehr als 12 Gew.-% polyungesättigte Linolsäure und nicht mehr als 0,5 Gew.-% polyungesättigte Linolensäure, und mit einer effektiven Menge eines Emulgators, der das Öl in Form einer stabilen Emulsion in der entrahmten Milch zu halten vermag, und mit einem Modifizierungsmittel, umfassend:-
ein Polysaccharid oder Oligosaccharid;
und mit einem Stabilisator, umfassend:-
ein Kohlehydratgel, das ein Alginat, ein Guar-Gum oder eine Carboxymethylcellulose ist.

2. Ein angereichertes Molkereiprodukt nach Anspruch 1, in dem das Molkereiprodukt flüssige Milch ist.

3. Ein angereichertes Molkereiprodukt nach Anspruch 1, in dem die Ölsäure 75 bis 85 Gew.-% des vegetabilischen Öls ausmacht, in dem die Linolsäure nicht mehr als 6 Gew.-% des vegetabilischen Öls ausmacht und in dem die Linolensäure nicht mehr als 0,1 Gew.-% des vegetabilischen Öls ausmacht.

4. Ein angereichertes Molkereiprodukt nach Anspruch 2, in dem das vegetabilische Öl 1 bis 5 Gew.-% der angereicherten Milch ausmacht.

5. Ein angereichertes Molkereiprodukt nach Anspruch 1, in dem der Emulgator ausgewählt ist aus:-
a) Mono- und Diglyceriden;
b) Feststoffen einer nicht-fetten Milch, einschließlich Milchprotein;
c) Phospholipiden; und
d) Mischungen von zwei oder mehr der obigen Bestandteile.

6. Ein angereichertes Molkereiprodukt nach Anspruch 1, in dem der Emulgator Feststoffe von nicht-fetter Milch umfaßt und entweder ein Mono- oder Diglycerid oder zusätzliches Milchprotein.

7. Ein angereichertes Molkereiprodukt nach Anspruch 1, in dem der Stabilisator und das Modifizierungsmittel ein Kohlehydratgel enthalten, bei dem es sich um Carboxymethylcellulose handelt, der mikrokristalline Cellulose beigemischt wurde.

8. Ein angereichertes Molkereiprodukt nach Anspruch 1, in dem das Modifizierungsmittel ein Polysaccharid enthält, das ein Maltodextrin ist oder das aus Maissirup-Feststoffen besteht.

9. Eine sprüh-getrocknete Vormischung, geeignet für die Verwendung zur Herstellung von mit monoungesättigten Stoffen angereicherten Molkereiprodukten, umfassend:-
(a) 70 bis 85 Gew.-% eines vegetabilischen Öls, das sich ableitet von Rapssamen oder Sonnenblumenkernen, und mindestens 70 Gew.-% monoungesättigte Ölsäure, nicht mehr als 12 Gew.-% polyungesättigte Linolsäure und nicht mehr als 0,5 Gew.-% polyungesättigte Linolensäure enthält; und
(b) eine effektive Menge eines Emulgators, um das Öl mindestens zeitweilig in Form einer Emulsion in Wasser zu halten, während es sprüh-getrocknet wird.

## Revendications

1. Produit laitier mono-insaturé enrichi comprenant du lait écrémé, une huile végétale extraite de graines de colza ou de graines de tournesol et contenant au moins 70 % en poids d'acide oléïque mono-insaturé, pas plus de 12 % en poids d'acide linoléïque poly-insaturé, et pas plus de 0,5 % en poids d'acide linolénique poly-insaturé, ainsi qu'une quantité suffisante d'un agent émulsifiant afin de maintenir l'huile sous forme d'une émulsion stable dans le lait écrémé, et un agent modifiant comprenant :
- un polysaccharide ou oligosaccharide ; ainsi qu'un agent stabilisant comprenant :
- un gel d'hydrate de carbone pouvant être un alginate, une gomme de guar ou une cellulose carboxyméthyle.

2. Produit laitier enrichi selon la revendication 1, caractérisé en ce que le produit laitier est du lait liquide.

3. Produit laitier enrichi selon la revendication 1, dans lequel l'acide oléïque comprend de 75 à 85 % en poids d'huile végétale, l'acide linoléïque ne comprend pas plus de 6 % en poids d'huile végétale, et l'acide linolénique ne comprend pas plus de 0,1 % en poids d'huile végétale.

4. Produit laitier enrichi selon la revendication 2, dans lequel l'huile végétale comprend de 1 à 5 % en poids de lait enrichi.

5. Produit laitier enrichi selon la revendication 1, dans lequel l'agent émulsifiant est choisi parmi :
a) les monoglycérides et diglycérides ;
b) le lait écrémé déshydraté, y compris la protéine du lait ;
c) les phospholipides ; et
d) les mélanges de deux ou plus de deux constituants ci-dessus.

6. Produit laitier enrichi selon la revendication 1, dans lequel l'agent émulsifiant comprend du lait écrémé déshydraté et soit une monoglycéride ou une diglycéride, soit une protéine complémentaire de lait.

7. Produit laitier enrichi selon la revendication 1, dans lequel l'agent stabilisant et l'agent modifiant incluent un gel d'hydrate de carbone qui est une cellulose carboxyméthyle à laquelle a été mélangée de la cellulose microcristalline.

8. Produit laitier enrichi selon la revendication 1, dans lequel l'agent modifiant inclut un polysaccharide qui est une maltodextrine ou qui est constitué par du sirop de glucose déshydraté.

9. Prémélange séché par pulvérisation convenant pour la préparation de produits laitiers mono-insaturés enrichis comprenant : -
(a) de 70 à 85 % en poids d'une huile végétale extraite de graines de colza ou de graines de tournesol et contenant au moins 70 % en poids d'acide oléïque mono-insaturé, pas plus de 12 % en poids d'acide linoléïque poly-insaturé, et pas plus de 0,5 % en poids d'acide linolénique poly-insaturé ; et
(b) une quantité suffisante d'un agent émulsifiant afin de maintenir l'huile, au moins temporairement, sous forme d'une émulsion dans l'eau pendant le séchage par pulvérisation.
